# EUROPEAN PATENT APPLICATION

(11) **EP 4 484 786 A1**
(43) Date of publication of application: **01.01.2025**
(21) Application number: 23765990.9
(22) Date of filing: 07.03.2023
(51) Int. Cl.: F16D 55/22, F16D 65/095, F16D 65/14, F16D 121/14, F16D 121/24

(54) **ELECTROMECHANICAL DRY-TYPE BRAKE CALIPER**

(30) Priority: 07.03.2022 CN 202210216420
(71) Applicant: Bethel Automotive Safety Systems Co., Ltd., Wuhu, Anhui 241009 (CN)
(72) Inventor: GUO, Fengliang, Wuhu, Anhui 241009 (CN); ZHU, Yuancheng, Wuhu, Anhui 241009 (CN); YAN, Guanghui, Wuhu, Anhui 241009 (CN)
(74) Representative: Canzler & Bergmeier Patentanwälte Partnerschaft mbB
(86) International application number: PCT/CN2023/080057
(87) International publication number: WO 2023/169412

(57) **Abstract**

An electromechanical dry-type brake caliper. A planetary roller screw assembly (10) is mounted in a cylinder hole of a brake caliper assembly (11); a motor and a speed reduction mechanism are directly or indirectly connected to the planetary roller screw assembly (10); the planetary roller screw assembly (10) comprises a lead screw (1), a nut (2), and rollers (3) mounted between the lead screw (1) and the nut (2); the rollers (3) are mounted on a retainer (5) located between the lead screw (1) and the nut (2); a torsion spring (8) is mounted between the retainer (5) and the nut (2); anti-rotation bosses (4a, 4b) which are matched with each other are provided on the retainer (5) and the nut (2); one side edge of the second anti-rotation boss (4b) on the retainer (5) is attached to one side edge of the first anti-rotation boss (4a) on the nut (2) by means of the elastic force of the torsion spring (8); and the attachment position is the initial position of the rollers (3) and the retainer (5).

## Description

### FIELD OF TECHNOLOGY

The present disclosure relates to the field of braking system technology, and in particular relates to an electromechanical dry brake caliper.

### BACKGROUND

An electromechanical dry brake caliper generally includes a linear drive mechanism, whose function is to convert the rotational motion of a drive motor and reduction mechanism into linear motion of connecting components. One such linear drive mechanism is a planetary roller lead screw.

Current planetary roller lead screws are generally classified into the following types:

Standard planetary roller lead screws, where a lead screw and a nut are paired with multiple threaded rollers. This structure requires high precision in the dimensions and geometric tolerances of the components. Even slight deviations in component accuracy can cause interference and jamming, leading to stringent requirements for both machining and assembly. The manufacturing process is highly precise, resulting in a high cost for this type of planetary roller lead screw.

Reverse planetary roller lead screws, whose structure and principle are similar to those of standard planetary roller lead screws. The key difference is that in reverse planetary lead screws, the nut transmits torque and rotational speed, while the lead screw transmits axial force.

Cyclic planetary roller lead screws, where each of the rollers is equipped with multiple sets of annular grooves. The distance between these grooves matches the thread pitch. As the rollers rotate, they disengage from the threads of the lead screw and fall into the internal grooves of the nut. Afterward, cams at both ends of the nut push the rollers back to their initial axial position before rotation. This process allows the rollers to re-enter the rolling paths of the lead screw and nut. This cyclic motion ensures continuous engagement and smooth operation, reducing wear and maintaining precision over time. However, during the process of re-entering the rolling path, precise alignment between the annular grooves of the rollers and multiple teeth of the nut is required. Additionally, this necessitates high precision in the machining and assembly of cams and nuts, leading to increased costs.

Differential planetary roller lead screw: in this type, the structure is more simplified, allowing it to support higher loads at the same volume and weight. It also offers advantages such as higher input rotational speed, smaller lead, and larger reduction ratio. The disadvantages are the lead screw's threaded engagement area may experience slipping issues, leading to instability in the transmission ratio. Under larger loads, severe wear can occur, resulting in a loss of accuracy and reduced reliability.

In summary, the existing technology in planetary roller lead screws represents two situations:
(1) Standard planetary roller lead screws, reverse planetary roller lead screws, and cyclic planetary roller lead screws are costly, have limited production capacity, and are challenging to widely use in the automotive industry.
(2) Differential planetary roller lead screws face issues with lifespan and reliability under heavy loads, making them difficult to apply in automotive safety systems.

### SUMMARY

To address the aforementioned issues, the present disclosure provides an electromechanical dry brake caliper, including a motor, a reduction gear, a planetary roller lead screw assembly, and a brake caliper assembly, wherein the planetary roller lead screw assembly is installed within a cylinder bore of the brake caliper assembly , and the motor and the reduction gear are directly or indirectly connected to the planetary roller lead screw assembly; wherein the planetary roller lead screw assembly includes a lead screw, a nut, and rollers mounted between the lead screw and the nut, wherein the rollers are installed on a cage positioned between the lead screw and the nut, with a torsion spring installed between the cage and the nut; wherein the nut is equipped with a first anti-rotation projection, and the cage is equipped with a second anti-rotation projection that matches the first anti-rotation projection, wherein an elastic force of the torsion spring causes a first side of the first anti-rotation projection equipped on the nut to be in contact with a first side of the second anti-rotation projection equipped on the cage, at which time the rollers and the cage are in their initial positions.

Further improvement includes: each of the rollers is an annular groove-threaded roller, and each of the rollers is installed on a cage that restricts the circumferential position of the rollers while allowing the rollers to rotate around its own axis within the cage; after a predetermined period following initiation of a single working cycle, the nut moves away from its initial position relative to the screw, and the cage moves away from its initial position relative to the nut.

Further improvement includes: the cage includes two circular portions and a connecting portion b that links the two circular portions; wherein the circular portions are provided with evenly distributed through-holes; each of the rollers includes an annular groove b and cylindrical ends a on both sides of the annular groove b. The cylindrical ends a have a shaft-hole clearance fit with the through-holes in the circular portions of the cage, and the length of the annular grooves b is shorter than the shortest distance between the two circular portions of the cage. Small wave springs are installed between an end face of the annular groove b and the annular parts of the cage.

Further improvement includes: internally the nut includes a threaded portion a and a bottom end of the nut includes a return portion b, the torsion spring (8) is installed in the internal cavity of the return portion (2b) of the nut (2), and wherein the torsion spring (8) is a spring that exerts torsional force;

Further improvement includes: the return portion b of the nut is fixedly connected to the base; an end face of the base is circular or oval; the return portion b is connected to the base through a threaded connection, welding, or riveting; the base is in contact with an end face of a brake pad of the brake caliper assembly.

Further improvement includes: there are at least one pair of anti-rotation projections, and each pair is two projections fixed on the inner walls of an end of the cage and an end of the nut either through assembly or by one-piece molding.

Further improvement includes: a gap between the rollers and the nut is smaller than a gap between the rollers and the screw, so that under no-load conditions friction force between the lead screw and the rollers is less than friction force between the nut and the rollers.

Further improvement includes: an outer wall of the nut is provided with a guiding portion, and the guiding portion is a groove or a projection. The guiding portion mates with the cylinder bore of the brake caliper assembly, thereby guiding the nut in the circumferential direction, ensuring that the nut moves linearly during operation.

Further improvement includes: the nut includes at least a cylindrical portion or a smoothly transitioning section, which cooperates with a seal ring of the brake caliper assembly for sealing and keeping out foreign objects.

Further improvement includes: a sealing cover is installed between an end face of the cylinder bore and the nut of the brake caliper assembly.

The forward and reverse actions of the motor and reduction mechanism are transmitted through the planetary roller lead screw assembly, which converts the rotational motion of the motor into the translational motion of the brake pad, thereby achieving clamping and release actions of the brake caliper. A normal working cycle includes following stages:
Clamping stage, including:
Empty stroke stage: This stage requires the planetary roller lead screw assembly to operate, pushing the brake pad to eliminate the gap between the brake pad and a brake disc. A gap between the rollers and the nut is smaller than a gap between the rollers and the lead screw, and therefore during this process, the frictional torque between the lead screw and the rollers is less than the torque provided by the torsion spring. Consequently, there is no relative motion between the rollers and the nut, and the lead screw performs a sliding motion on the rollers. The advantage of this setup is that, under the same load conditions, the planetary roller lead screw performs rolling motion relative to the empty stroke, this motion reduces the working stroke of the nut. This allows for a shorter nut length, thereby reducing the cost of the nut. During this stage, since the axial force is zero, the frictional forces-whether sliding or rolling-are very small, with only minimal differences between them.

Loading stage: once the axial gap is eliminated, the brake pad and caliper body begin to deform. The reaction force from this deformation is transferred to the planetary roller lead screw. As the frictional torque between the lead screw and the rollers gradually exceeds the elastic force of the torsion spring, the rollers roll between the lead screw and the nut. This operation is consistent with the cyclic planetary roller lead screw, offering high transmission efficiency and load capacity. Additionally, by eliminating grooves and cams on the nut, the motion becomes more continuous, accommodating high rotational speeds and meeting the response time requirements on the brake system.

During the loading stage, if the compressible stroke of the torsion spring is greater than the limited stroke of the braking system, the requirements will be met.

### Releasing stage, including:

Unloading stage: frictional torque between the rollers and the lead screw under axial load is greater than torque produced by the torsion spring, since the planetary roller lead screw operates with rolling friction, the planetary roller lead screw has high efficiency in the reverse direction, achieving rapid unloading.

When the axial load is removed, the frictional torque becomes less than the torque produced by the torsion spring, and the rollers and the cage will return to their initial position due to the restoring force of the torsion spring. If the lead screw continues to rotate in the release direction, the frictional torque will be much smaller than the torque generated by the anti-rotation mechanism, and the lead screw will still experience sliding friction, equivalent to the lead screw undergoing sliding friction.

The beneficial effects of the present disclosure include the following features of the electromechanical dry brake caliper:
(1) The machining requirements for the planetary roller lead screw assembly are reduced, which in turn lowers the cost.

In a cyclic planetary roller lead screw, multiple rollers with annular grooves mesh with the screw and the nut. After each rotation of the rollers, the rollers disengage from the screw threads and fall into the nut's internal grooves. Cams at both ends of the nut then push the rollers back to their axial starting position before the rollers re-entering the rolling path. During the entry of the rollers into the rolling path, the annular grooves of the rollers need to align with multiple teeth of the nut simultaneously. At high rotational speeds, this alignment becomes more challenging, which imposes high demands on the machining and assembly of the cams and the nut, leading to increased costs. The proposed solution of the present disclosure eliminates the cams at both ends of the nut and the grooves on the sides of the nut. Consequently, the rollers are no longer required to simultaneously align with multiple teeth of the nut before entering the rolling path. In the proposed solution, torsion springs are used for repositioning, with anti-rotation projections ensuring the initial position of the rollers. The manufacturing technology for torsion springs and bosses is well-established and cost-effective, resulting in a significant reduction in overall costs.

Additionally, the planetary roller lead screw in the present disclosure retains the advantages of the cyclic planetary roller lead screw, such as extremely small lead, for instance, 1 mm. This reduces the required input torque, lessening the strength demands on the gear mechanism and allowing for a smaller motor and gearbox, which in turn reduces the overall size and cost.

(2) The system is designed to balance high load-bearing capacity and high transmission efficiency.

Although in the present disclosure, sliding friction occurs during the empty stroke, theoretically reducing transmission efficiency, output power equals product of output axial force and axial displacement, therefore the axial force during this phase is minimal. As the output power is the product of this small force and the axial movement distance, it is nearly negligible. Consequently, the empty stroke has a minimal impact on overall transmission efficiency and does not affect response speed. Only during the loading stage is a large amount of output power required. At this stage, the invention uses rolling body transmission, achieving transmission efficiency consistent with the planetary roller lead screw. Therefore, using sliding friction during the empty stroke does not affect the overall transmission efficiency, ensuring high efficiency overall. In addition, the present disclosure, like the cyclic planetary roller lead screw, possesses a load-bearing capacity that surpasses that of ball screws.

(3) The roller annular grooves can automatically adjust to align with the corresponding track position.

In the present disclosure, each of the rollers includes an annular groove and cylindrical ends on both sides of the annular groove. Each of the rollers is mounted on a cage, which includes two circular portions and a connecting part that links them. The circular portions have through holes, and the cylindrical ends of the rollers fit with these holes with a shaft clearance fit. Specifically, the length of the annular grooves of the rollers is shorter than the shortest distance between the two circular portions of the cage. This design provides an axial play space for the rollers within the cage, allowing for axial movement. Additionally, wave-shaped small springs are installed between an end face of the annular groove on the rollers and the circular portions of the cage, the small springs ensure that the rollers remain in a relatively fixed position relative to the cage without external force. During the assembly of a planetary roller lead screw, axial movement of the rollers within the cage allows the annular groove of the rollers to adjust and align with the threaded grooves of the screw or nut.

### BRIEF DESCRIPTION OF THE DRAWINGS

FIG. 1 is a schematic diagram of a structure of an electromechanical dry brake caliper according to the present disclosure.
FIG. 2 is a schematic diagram of a structure of a planetary roller lead screw assembly according to the present disclosure.
FIG. 3 is an exploded schematic diagram of a planetary roller lead screw assembly according to the present disclosure.

### Reference Numerals

- 1: Lead screw
- 2: Nut
- 2a: Threaded portion
- 2b: Return portion
- 3: Rollers
- 3a: Cylindrical ends
- 3b: Annular grooves
- 4: Anti-rotation mechanism
- 4a: First anti-rotation projection
- 4b: Second anti-rotation projection
- 5: Cage
- 5a: First circular portion
- 5b: Connecting portion
- 5c: Second circular portion
- 6: Small springs
- 7: Guiding portion
- 8: Torsion spring
- 9: Base
- 10: Planetary roller lead screw assembly
- 11: Brake caliper assembly
- 12: Guide screw
- 13: Seal ring
- 14: Seal cover

### DETAILED DESCRIPTION

To deepen the understanding of the invention, the following detailed description, based on an embodiment, will further explain the invention. The present disclosure is provided solely for explanatory purposes and does not restrict the scope of the invention.

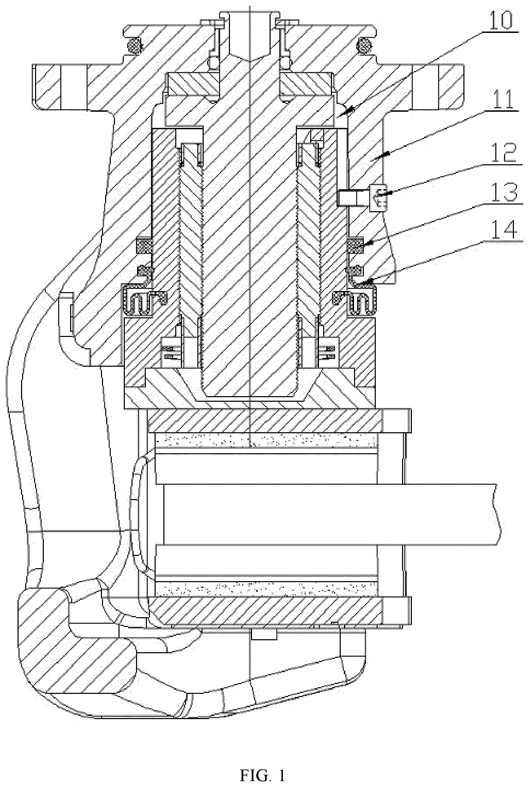

As shown in FIG. 1, the present disclosure provides an electromechanical dry brake caliper, including a motor, a reduction gear, a planetary roller lead screw assembly 10, and a brake caliper assembly 11. The planetary roller lead screw assembly 10 is installed within a cylinder bore of the brake caliper assembly 11. An output end of the motor is connected directly to the input end of the planetary roller screw assembly 10; or it can be indirectly connected through a reduction and torque-increasing mechanism. This setup transmits the power output from the motor and reduction mechanism to the planetary roller screw assembly 10. In this case, an input end of the planetary roller screw assembly 10 is a screw, while the nut serves as the output end. The nut 2 of the planetary roller screw assembly 10 engages directly with the output component of the brake caliper assembly 11, the output component is a brake pad. This setup eliminates the need for the traditional hydraulic brake system's piston design. The brake caliper assembly 11 and the motor and the reduction gear are made using traditional manufacturing processes.

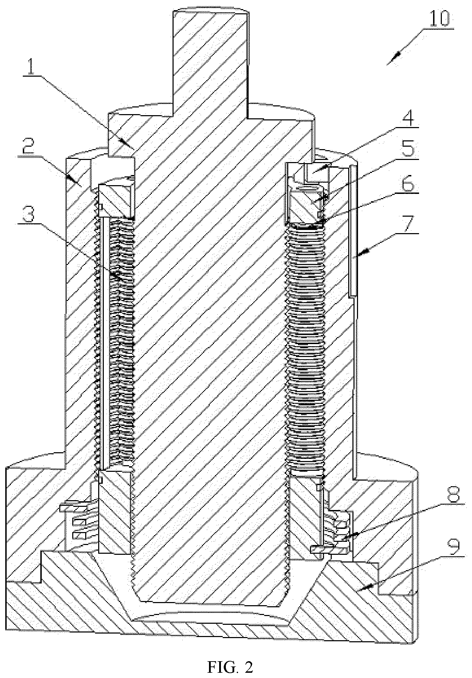

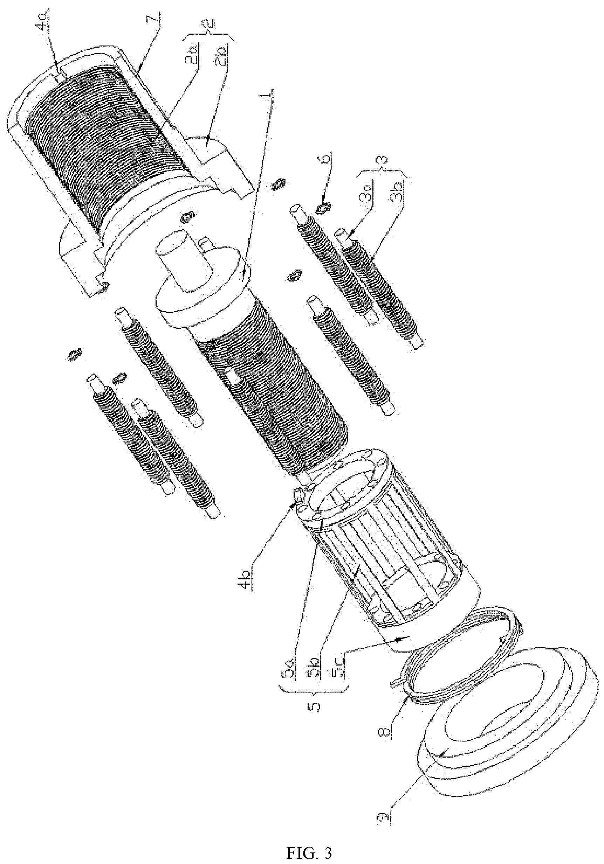

As shown in FIG. 2 and FIG. 3, these figures provide structural schematic diagrams of the planetary roller screw assembly according to embodiments of the present disclosure.

The planetary roller screw assembly includes a screw 1, a nut 2, and rollers 3 installed between the threaded portion 2a of the screw 1 and the nut 2. A gap between the annular groove 3b of the rollers 3 and the threaded portion 2a of the nut 2 is smaller than a gap between the annular groove 3b of the rollers 3 and the threads of the screw 1; this design ensures that under no-load conditions, friction between the screw 1 and the rollers 3 is less than friction between the nut 2 and the rollers 3, causing any sliding to occur between the screw 1 and the rollers 3. Each of the rollers 3 have a cylindrical end 3a, the cylindrical ends 3a are smooth shafts. Annular grooves 3b are formed in a middle part of each of the rollers 3, and the annular grooves 3b include multiple closed annular recesses. The distance between each two adjacent closed annular recesses in each annular groove 3b matches the thread pitch of the screw 1 and the nut 2.

The rollers 3 are installed on the cage 5, the cage 5 includes a first circular portion 5a, a second circular portion 5c, and a connecting portion 5b that connects the first circular portion 5a and the second circular portion 5c. The cage 5 can be either made as a single piece or assembled from multiple parts. In one embodiment, the outer wall surfaces of the first circular portion 5a and the second circular portion 5c of the cage 5 are equipped with annular grooves. The connecting portion 5b can be rolled into these annular grooves on the outer wall surfaces of the first circular portion 5a and the second circular portion 5c, and then fixed in place by laser welding. The first circular portion 5a and the second circular portion 5c of the cage 5 each have multiple evenly distributed through-holes. The number of through-holes of each circular portion is equal to the number of rollers 3. The cylindrical ends 3a of the rollers 3 fit with the through-holes in the annular parts of the cage 5 with an axial clearance fit, which allows the rollers 3 to rotate freely around their own axes within the cage 5. The length of the annular grooves 3b in the rollers 3 is less than the shortest distance between the first circular portion 5a and the second circular portion 5c, which provides an axial clearance for the rollers 3 to move within the cage 5. Additionally, small springs 6 such as wave springs may be installed between an end face of the annular grooves 3b in the rollers 3 and the circular portions of the cage 5. These small springs maintain the relative position of the rollers 3 with respect to the cage 5. The damping effect of the wave spring is sufficiently small so as not to affect the rotational movement of the rollers 3.

The planetary roller screw assembly 10 includes an anti-rotation mechanism 4, the anti-rotation mechanism 4 includes a pair of cooperating anti-rotation lugs: a first anti-rotation lug 4a and a second anti-rotation lug 4b. The first anti-rotation projection 4a is located on the inner wall surface of the nut 2 and is either assembled or integrally formed with the nut. The second anti-rotation projection 4b is situated on the end face of the cage 5 and is either assembled or integrally formed with the cage. The position where the first anti-rotation projection 4a and the second anti-rotation projection 4b make contact defines the initial position of the cage 5 relative to the rollers 3. The nut 2 includes a threaded portion 2a with internal threads and a return portion 2b with an internal cavity. The return portion 2b is located at an end of the nut 2 opposite to the first anti-rotation projection 4a. The return portion 2b is threadedly connected to the base 9. The end face of the base 9 is designed to be circular, and the base 9 serves as an output end of the planetary roller screw assembly 10, engaging with the brake pad. The internal cavity of the return portion 2b is equipped with a torsion spring 8. The torsion spring 8 has two ends, each with a projection. One of these projections extends towards the rotational center of the torsion spring 8 and is fixed to the cage 5 by welding. The other one of these projections extends away from the rotational center of the torsion spring 8 and is fixed to the nut 2 by welding. The torsion spring 8 has a cylindrical cross-section and the quantity of the torsion spring 8 is one, when the cage 5 and the rollers 3 are in the initial position, the torsion spring 8 is in a state of minimal or no elastic deformation, this state of torsion spring 8 tends to push cage 5 back to its initial position relative to nut 2.

The outer wall of the nut 2 is equipped with a guiding section 7, which can be either a groove or a projection. In tone embodiment, the guiding section 7 is a groove on the outer side of the nut 2. This guiding section 7 engages with the cylinder bore of the brake caliper assembly 11. The inner wall of the cylinder bore of the brake caliper assembly 11 is equipped with threaded holes. Anti-rotation screws pass through these threaded holes and extend into the guiding groove of the nut 2. This setup restricts the rotation of the nut 2 in the circumferential direction, allowing only linear movement.

The nut 2 includes at least one cylindrical section or a smoothly transitioning portion, which mates with the rubber sealing ring 13 of the brake caliper assembly, providing a sealing function. Additionally, a seal cover 14 is positioned between an end of the cylinder bore of the brake caliper assembly 11 and the nut 2 to prevent foreign objects from entering the assembly.

In the working process:
Braking force generation process in the electromechanical dry brake caliper: the motor and the reduction mechanism operate, with their rotational motion transmitted to the planetary roller lead screw assembly 10. The lead screw 1 rotates in first direction, and its threaded surface engages with the annular groove 3b of the rollers 3. Several rollers 3 share the load transmitted from the lead screw 1. Due to the gap between the rollers 3 and the lead screw 1 being larger than the gap between the rollers 3 and the nut 2, the friction force between the lead screw 1 and the rollers 3 is smaller compared to the friction force between the nut 2 and the rollers 3. At this point, the friction force between the rollers 3 and the lead screw 1 is sufficiently small, and the torsion spring 8 provides rotational resistance force to the cage 5, this rotational resistance force exceeds the friction force between the lead screw 1 and the rollers 3. As a result, the position of the rollers 3 and the cage 5 relative to the nut 2 remains unchanged, and the rollers 3, cage 5, and nut 2 move together towards the brake pad. The rollers 3 and the lead screw 1 effectively form a sliding screw pair.

When the brake pads contact the brake disc, the system begins to generate braking force. The reaction force of the braking force is transmitted back to the planetary roller lead screw assembly 10. As the axial force on the nut 2 increases, the axial force between the lead screw 1 and the rollers 3 also rises. Once the predetermined axial force is reached, the rollers 3 and the cage 5 overcome the rotational resistance force provided by the torsion spring 8. Then, the rollers 3 start to rotate around the axis of the lead screw 1 while also rotating within the cage 5. The torsion spring 8 is compressed and deformed elastically. At this point, the torque transmitted by the lead screw 1 is converted through the threaded engagement between the lead screw 1 and the annular groove 3b of the rollers 3, and between the annular groove 3b of the rollers 3 and the threads of the nut 2. This results in the longitudinal movement of the nut 2, the cage 5, and the rollers 3, similar to a planetary roller lead screw mechanism. Then, the nut 2 continues to push the base 9 and brake pads, clamping the brake disc to generate braking force. Due to rolling friction, the friction coefficient is low and transmission efficiency is high, allowing for faster linear drive speeds and higher output forces under the same conditions.

When the braking force release process of the electromechanical dry brake caliper: the lead screw 1 rotating in a second direction opposite to the first direction. At an early stage of the release process, the rollers 3 are still compressed by the lead screw 1 and the nut 2. The relative motion between the lead screw 1 and the nut 2 is achieved through the rolling of the rollers 3. Due to the fact that the rolling friction has a low coefficient, the transmission efficiency is high. This results in a faster release of clamping force in a shorter time under the same conditions. The torsion spring 8 remains compressed throughout the process. After the braking force disappears, the torsion spring still provides elastic force that helps return the cage 5 and rollers 3 to their initial position. This occurs as the cage 5 and rollers 3 move within the guideways until the second anti-rotation projection 4b of the cage 5 and the first anti-rotation projection 4a of the nut 2 are in contact. If rotation continues in the release direction, the frictional torque between the lead screw 1 and rollers 3 is less than the torque produced by the projection engagement, resulting in continued sliding. At this point, one work cycle is completed and preparations are made for the next cycle.

The above case applies only to situations where torque and speed are input into the lead screw and pressure is output from the nut. If torque and speed are input into the nut and pressure is output from the lead screw, the design would be the opposite of the case described above.

The above description, combined with the accompanying drawings, provides an exemplary explanation of the invention. Clearly, the specific implementation of this invention is not limited to the methods described above. Any non-substantial modifications made using the conceptual and technical solutions of this invention, or the direct application of the aforementioned conceptual and technical solutions to other scenarios without modifications, are all within the scope of this invention.

## Claims

1. An electromechanical dry brake caliper, comprising a motor, a reduction gear, a planetary roller lead screw assembly (10), and a brake caliper assembly (11), wherein the planetary roller lead screw assembly (10) is installed within a cylinder bore of the brake caliper assembly (11), and the motor and the reduction gear are directly or indirectly connected to the planetary roller lead screw assembly (10);
wherein the planetary roller lead screw assembly (10) comprises a lead screw (1), a nut (2), and rollers (3) mounted between the lead screw (1) and the nut (2), wherein the rollers (3) are installed on a cage (5) positioned between the lead screw (1) and the nut (2), with a torsion spring (8) installed between the cage (5) and the nut (2);
wherein the nut (2) is equipped with a first anti-rotation projection (4a), and the cage (5) is equipped with a second anti-rotation projection (4b) that matches the first anti-rotation projection (4a), wherein an elastic force of the torsion spring (8) causes a first side of the first anti-rotation projection (4a) equipped on the nut (2) to be in contact with a first side of the second anti-rotation projection (4b) equipped on the cage (5), at which time the rollers (3) and the cage (5) are in their initial positions; and
wherein after a working cycle, under non-load conditions, the rollers (3) and the cage (5) both return to their initial positions;

2. The electromechanical dry brake caliper according to claim 1, wherein the first anti-rotation projection (4a) is provided on an inner wall of the nut (2), and the second anti-rotation projection (4b) is provided on an end face of the cage (5).

3. The electromechanical dry brake caliper according to claim 2, wherein the first anti-rotation projection (4a) is integrally formed with the nut (2), and the second anti-rotation projection (4b) is integrally formed with the cage (5).

4. The electromechanical dry brake caliper according to claim 1, wherein, after a predetermined period following initiation of a single working cycle, the nut (2) moves away from its initial position relative to the screw (1), and the cage (5) moves away from its initial position relative to the nut (2).

5. The electromechanical dry brake caliper according to claim 1, wherein the cage (5) provides circumferential positioning for the rollers (3) and allows the rollers (3) to rotate around their own axis within the cage (5).

6. The electromechanical dry brake caliper according to claim 5, wherein the cage (5) comprises two circular portions and a connecting portion (5b) that links the two circular portions; wherein the circular portions are provided with evenly distributed through-holes.

7. The electromechanical dry brake caliper according to claim 6, wherein the rollers (3) are annular groove-threaded rollers, each of the rollers (3) comprises an annular groove (3b) and cylindrical ends (3a) on both sides of the annular groove (3b), wherein each of the cylindrical ends (3a) has a shaft-hole clearance fit with one of the through-holes in the circular portions of the cage (5), and a length of the annular grooves (3b) is shorter than a shortest distance between the two circular portions of the cage (5).

8. The electromechanical dry brake caliper according to claim 7, wherein small springs (6) are installed between each end face of the annular grooves (3b) and a corresponding one of the circular portions of the cage (5).

9. The electromechanical dry brake caliper according to claim 1, wherein internally the nut (2) comprises a threaded portion (2a) and a bottom end of the nut (2) comprises a return portion (2b), the torsion spring (8) is installed in an internal cavity of the return portion (2b) of the nut (2), and wherein the torsion spring (8) is a spring that exerts torsional force.

10. The electromechanical dry brake caliper according to claim 9, wherein the return portion (2b) of the nut (2) is fixedly connected to the base (9); an end face of the base (9) is circular or oval; the return portion (2b) is connected to the base (9) through threaded connection, or welding, or by riveting; and wherein the base (9) is in contact with an end face of a brake pad of the brake caliper assembly (11).

11. The electromechanical dry brake caliper according to claim 9, wherein a shape of the torsion spring (8) is planar, cylindrical, or conical.

12. The electromechanical dry brake caliper according to claim 1, wherein a gap between the rollers (3) and the nut (2) is smaller than a gap between the rollers (3) and the lead screw (1), so that under no-load conditions friction force between the lead screw (1) and the rollers (3) is less than friction force between the nut (2) and the rollers (3).

13. The electromechanical dry brake caliper according to claim 1, wherein an outer wall of the nut (2) is provided with a guiding portion (7), and the guiding portion (7) is a groove or a projection, the guiding portion (7) mates with the cylinder bore of the brake caliper assembly (11), thereby guiding the nut (2) in a circumferential direction, ensuring that the nut (2) moves linearly during operation.

14. The electromechanical dry brake caliper according to claim 1, wherein the nut (2) comprises at least a cylindrical portion or a smoothly transitioning section, which collaborates with a seal ring (13) of the brake caliper assembly (11) for sealing and keeping out foreign objects.

15. The electromechanical dry brake caliper according to claim 1, wherein a sealing cover (14) is installed between an end face of the cylinder bore and the nut of the brake caliper assembly (11).
